# EUROPEAN PATENT SPECIFICATION

(11) **EP 3 968 642 B1**
(45) Date of publication and mention of the grant of the patent: **14.10.2026**
(21) Application number: 21200633.2
(22) Date of filing: 20.03.2008
(51) Int. Cl.: H04N 19/70, H04N 19/30, H04N 19/31

(54) **METHODS AND APPARATUS FOR VIDEO USABILITY INFORMATION (VUI) FOR SCALABLE VIDEO CODING (SVC)**
VERFAHREN UND VORRICHTUNG FÜR VIDEO-NUTZBARKEITSINFORMATION FÜR SKALIERBARE VIDEOCODIERUNG
PROCÉDÉS ET APPAREIL D'INFORMATIONS D'ÉTAT QUALITATIF DE LA VIDÉO (VUI) POUR LE CODAGE VIDÉO À ÉCHELLE VARIABLE (SVC)

(30) Priority: 12.04.2007 US 91149007 P
(43) Date of publication of application: 16.03.2022
(62) Document number(s) of the earlier application(s) in accordance with Art. 76 EPC: 19155114.2 / 3 518 547; 08727011.2 / 2 137 973
(73) Proprietor: InterDigital VC Holdings, Inc., Wilmington, DE 19809 (US)
(72) Inventor: LUO, Jiancong, Skillman, 08558 (US); YIN, Peng, Ithaca, 14850 (US); ZHU, Lihua, San Jose, 95132 (US)
(74) Representative: AWA Sweden AB

(56) References cited:
- US-A1- 2005 254 575
- LUO J ET AL: "VUI updates for SVC", VIDEO STANDARDS AND DRAFTS, XX, XX, no. JVT-W064, 24 April 2007 (2007-04-24), XP030007024
- ZHU L ET AL: "SVC hypothetical reference decoder", VIDEO STANDARDS AND DRAFTS, XX, XX, no. JVT-V068, 21 January 2007 (2007-01-21), XP030006876
- "Joint Scalable Video Model (JSVM) 9_Annex G", VIDEO STANDARDS AND DRAFTS, XX, XX, no. W8751, 5 April 2007 (2007-04-05), XP030015246

## Description

### TECHNICAL FIELD

The present principles relate generally to video encoding and decoding and, more particularly, to methods and apparatus for video usability information (VUI) for scalable video coding (SVC).

### BACKGROUND

The International Organization for Standardization/International Electrotechnical Commission (ISO/IEC) Moving Picture Experts Group-4 (MPEG-4) Part 10 Advanced Video Coding (AVC) standard/International Telecommunication Union, Telecommunication Sector (ITU-T) H.264 recommendation (hereinafter the "MPEG-4 AVC standard") specifies syntax and semantics of the Video Usability Information (VUI) parameters of the sequence parameter sets. VUI includes information of aspect ratio, over-scanning, video signal type, chroma location, timing, Network Abstraction Layer (NAL) Hypothetical Reference Decoder (HRD) parameters, Virtual Coding Layer (VCL) HRD parameters, bitstream restriction, and so forth. The syntax of VUI parameters in the MPEG-4 AVC Standard is shown in TABLE 1.

**TABLE 1**

| vui_parameters() { | **C** | **Descripto r** |
|---|---|---|
| **aspect_ratio_info_present_flag** | 0 | u(1) |
| if( aspect_ratio_info_present_flag ) { | | |
| **aspect_ratio_idc** | 0 | u(8) |
| if( aspect_ratio_ide == Extended_SAR ) { | | |
| **sar_width** | 0 | u(16) |
| **sar_height** | 0 | u(16) |
| } | | |
| } | | |
| **overscan_info_present_flag** | 0 | u(1) |
| if( overscan_info_present_flag ) | | |
| **overscan_appropriate_flag** | 0 | u(1) |
| **video_signal_type_present_flag** | 0 | u(1) |
| if( video_signal_type_present_flag ) { | | |
| **video_format** | 0 | u(3) |
| **video_full_range_flag** | 0 | u(1) |
| **colour_description_present_flag** | 0 | u(1) |
| if( colour_description_present_flag ) { | | |
| **colour_primaries** | 0 | u(8) |
| **transfer_characteristics** | 0 | u(8) |
| **matrix_coefficients** | 0 | u(8) |
| } | | |
| } | | |
| **chroma_loc_info_present_flag** | 0 | u(1) |
| if( chroma_loc_info_present_flag ) { | | |
| **chroma_sample_loc_type_top_field** | 0 | ue(v) |
| **chroma_sample_loc_type_bottom_field** | 0 | ue(v) |
| } | | |
| if( profile_ide == 'SVC' ) { | | |
| **num_layers_minus1** | 0 | ue(v) |
| for( i = 0; i <= num_layers_minus1; i++ ) { | | |
| **temporal_level[ i** ] | 0 | u(3) |
| **dependency_id[** i ] | 0 | u(3) |
| **quality_level[ i ]** | 0 | u(2) |
| **timing_info_present_flag[ i ]** | 0 | u(1) |
| if( timing _info_present_flag[ i ] ) { | | |
| **num_units_in_tick[** i ] | 0 | u(32) |
| **time_scale[ i ]** | 0 | u(32) |
| **fixed_frame_rate_flag[ i ]** | 0 | u(1) |
| } | | |
| **nal_hrd_parameters_present_flag[ i ]** | 0 | u(1) |
| if( nal _hrd_parameters_present flag[ i ] ) | | |
| hrd_parameters() | | |
| **vcl_hrd_parameters_present_flag[ i** ] | 0 | u(1) |
| if( vcl_hrd_parameters_present_flag[ i ] ) | | |
| hrd_parameters() | | |
| 'if( nal_hrd_parameters_present_flag[ i ] | | |
| vcl_hrd_parameters_present_flag[ i ] ) | | |
| **low_delay_hrd_flag[ i ]** | 0 | u(1) |
| **pic_struct_present_flag[ i ]** | 0 | u(1) |
| } | | |
| } else { | | |
| **timing_info_present_flag** | 0 | u(1) |
| if( timing_info_present_flag ) { | | |
| **num_units_in_tick** | 0 | u(32) |
| **time_scale** | 0 | u(32) |
| **fixed_frame_rate_flag** | 0 | u(1) |
| } | | |
| **nal_hrd_parameters_present_flag** | 0 | u(1) |
| if( nal_hrd_parameters_present_flag ) | | |
| hrd_parameters() | | |
| **vcl_hrd_parameters_present_flag** | 0 | u(1) |
| if( vcl_hrd_parameters_present_flag ) | | |
| hrd_parameters() | | |
| 'if( nal _hrd_parameters_present _flag \|\| vcl_hrd_parameters_present_flag )' | | |
| **low_delay_hrd_flag** | 0 | u(1) |
| **pic_struct_present_flag** | 0 | u(1) |
| } | | |
| **bitstream_restriction_flag** | 0 | u(1) |
| if( bitstream_restriction_flag ) { | | |
| **motion_vectors_over_pic_boundaries_flag** | 0 | u(1) |
| **max_bytes_per_pic_denom** | 0 | ue(v) |
| **max_bits_per_mb_denom** | 0 | ue(v) |
| **log2_ max_mv_length_horizontal** | 0 | ue(v) |
| **log2_max_mv_length_vertical** | 0 | ue(v) |
| **num_reorder_frames** | 0 | ue(v) |
| **max_dec_frame_buffering** | 0 | ue(v) |
| } | | |
| } | | |

VUI provides extra information of the bitstream to the user for a variety of purposes. For example, in bitstream restriction information, VUI specifies: (1) if the motion is over picture boundary; (2) maximal bytes per picture; (3) maximal bits per macroblock; (4) maximal motion vector length (horizontal and vertical); (5) number of reordering frames; and (6) maximal decoded frame buffer size. When the decoder sees the information, instead of using the "level" information to set the decoding requirement which, in general, is higher than what the bitstream actually requires, the decoder can customize its decoding operation based on the tighter limit.

In US 2005/254575 A1 (HANNUKSELA ET AL) 17 November 2005 (2005-11 -17), it is proposed to signal a profile/level and HRD/VBV parameters for each layer of the scalable bit stream.

The document by ZHU L ET AL: "SVC hypothetical reference decoder", VIDEO STANDARDS AND DRAFTS, no. JVT-V068, 21 January 2007 (2007-01-21), XP030006876,is a JVT input document that also defines HRD constraints for each interoperability point of SVC. It mentions the possibility that several IOPs obey one HRD constraint but considers best to specify the HRD constraint for each IOP and do not provide further technical details on this possibility. It also proposes signalling of e.g. timing info parameters for each temporal layer, which are not related to bitstream restriction information.

The document "Joint Scalable Video Model (JSVM) 9_Annex G", VIDEO STANDARDS AND DRAFTS, no. W8751, 5 April 2007 (2007-04-05), XP030015246, discloses some parameters in the VUI syntax, such as HRD parameters, that are signaled for each interoperability point (IOP), each IOP being defined by a temporal_level, a dependency_id and a quality level, but bitstream restriction information is only signaled for the stream.

### SUMMARY

According to an aspect of the present principles, there is provided an apparatus. The apparatus includes an encoder for encoding video signal data into a bitstream. The encoder specifies a plurality of bitstream restriction information, which may exclude hypothetical reference decoder parameters, in the bitstream using a parameter set. The bitstream includes a plurality of interoperability points in the bitstream relating to scalable video coding, wherein the bitstream is scalable spatially, temporally and in quality, each interoperability point corresponds to a scalable layer in combination with all its dependent layers and is uniquely identified by a combination of dependency id, temporal_id and quality_id, said temporal_id indicates a temporal level, the bitstream includes a plurality of temporal levels, the parameter set indicates a number of temporal levels, a bitstream restriction information is specified for each temporal level, each of said plurality of bitstream restriction information includes at least one of a plurality of syntax elements specifying (1) if the motion is over picture boundary, (2) maximal number of bytes per picture, (3) maximal number of bits per macroblock, (4) maximal motion vector length, (5) maximal number of reordering frames, and (6) maximal decoded frame buffer size, and wherein all scalable layers with the same temporal level share the same bitstream restriction information.

According to another aspect of the present principles, there is provided a method. The method includes encoding video signal data into a bitstream. The encoding step includes specifying a plurality of bitstream restriction information, which may exclude hypothetical reference decoder parameters, in the bitstream using a parameter set. The bitstream includes a plurality of interoperability points in the bitstream relating to scalable video coding, wherein the bitstream is scalable spatially, temporally and in quality, each interoperability point corresponds to a scalable layer in combination with all its dependent layers and is uniquely identified by a combination of dependency_id, temporal_id and quality_id, said temporal_id indicates a temporal level, the bitstream includes a plurality of temporal levels, the parameter set indicates a number of temporal levels, a bitstream restriction information is specified for each temporal level, each of said plurality of bitstream restriction information includes at least one of a plurality of syntax elements specifying (1) if the motion is over picture boundary, (2) maximal number of bytes per picture, (3) maximal number of bits per macroblock, (4) maximal motion vector length, (5) maximal number of reordering frames, and (6) maximal decoded frame buffer size, and wherein all scalable layers with the same temporal level share the same bitstream restriction information.

According to yet another aspect of the present principles, there is provided an apparatus. The apparatus includes a decoder for accessing a bitstream and decoding at least one interoperability point from said bitstream. The decoder determines a plurality of bitstream restriction information, which may exclude hypothetical reference decoder parameters, from the bitstream using a parameter set. The bitstream includes a plurality of interoperability points in the bitstream relating to scalable video coding, wherein the bitstream is scalable spatially, temporally and in quality, each interoperability point corresponds to a scalable layer in combination with all its dependent layers and is uniquely identified by a combination of dependency_id, temporal_id and quality_id, said temporal_id indicates a temporal level, the bitstream includes a plurality of temporal levels, the parameter set indicates a number of temporal levels, a bitstream restriction information is specified for each temporal level, each of said plurality of bitstream restriction information includes at least one of a plurality of syntax elements specifying (1) if the motion is over picture boundary, (2) maximal number of bytes per picture, (3) maximal number of bits per macroblock, (4) maximal motion vector length, (5) maximal number of reordering frames, and (6) maximal decoded frame buffer size, and wherein all scalable layers with the same temporal level share the same bitstream restriction information.

According to still another aspect of the present principles, there is provided a method. The method includes accessing a bitstream and decoding at least one interoperability point from said bitstream. The decoding step includes determining a plurality of bitstream restriction information, which may exclude hypothetical reference decoder parameters, from the bitstream using a parameter set. The bitstream includes a plurality of interoperability points in the bitstream relating to scalable video coding, wherein the bitstream is scalable spatially, temporally and in quality, each interoperability point corresponds to a scalable layer in combination with all its dependent layers and is uniquely identified by a combination of dependency_id, temporal_id and quality_id, said temporal_id indicates a temporal level, the bitstream includes a plurality of temporal levels, the parameter set indicates a number of temporal levels, a bitstream restriction information is specified for each temporal level, each of said plurality of bitstream restriction information includes at least one of a plurality of syntax elements specifying (1) if the motion is over picture boundary, (2) maximal number of bytes per picture, (3) maximal number of bits per macroblock, (4) maximal motion vector length, (5) maximal number of reordering frames, and (6) maximal decoded frame buffer size, and wherein all scalable layers with the same temporal level share the same bitstream restriction information.

These and other aspects, features and advantages of the present principles will become apparent from the following detailed description of exemplary embodiments, which is to be read in connection with the accompanying drawings.

### BRIEF DESCRIPTION OF THE DRAWINGS

The present principles may be better understood in accordance with the following exemplary figures, in which:
FIG. 1 is a block diagram for an exemplary scalable video encoder to which the present principles may be applied;
FIG. 2 is a block diagram for an exemplary scalable video decoder to which the present principles may be applied;
FIG. 3 is a flow diagram for an exemplary method for encoding Video User Information (VUI);
FIG. 4 is a flow diagram for an exemplary method for decoding Video User Information (VUI);
FIG. 5 is a flow diagram for an exemplary method for encoding an MPEG-4 AVC Standard temporal Supplemental Enhancement Information (SEI) message, in accordance with an embodiment of the present principles; and
FIG. 6 is a flow diagram for an exemplary method for decoding an MPEG-4 AVC Standard temporal Supplemental Enhancement Information (SEI) message, in accordance with an embodiment of the present principles.

### DETAILED DESCRIPTION

The present principles are directed to methods and apparatus for video usability information (VUI) for scalable video coding (SVC).

The present description illustrates the present principles. It will thus be appreciated that those skilled in the art will be able to devise various arrangements that, although not explicitly described or shown herein, embody the present principles and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles means that a particular feature, structure, characteristic, and so forth described in connection with the embodiment is included in at least one embodiment of the present principles. Thus, the appearances of the phrase "in one embodiment" or "in an embodiment" appearing in various places throughout the specification are not necessarily all referring to the same embodiment.

It is to be appreciated that the use of the term "and/or", for example, in the case of "A and/or B", is intended to encompass the selection of the first listed option (A), the selection of the second listed option (B), or the selection of both options (A and B). As a further example, in the case of "A, B, and/or C", such phrasing is intended to encompass the selection of the first listed option (A), the selection of the second listed option (B), the selection of the third listed option (C), the selection of the first and the second listed options (A and B), the selection of the first and third listed options (A and C), the selection of the second and third listed options (B and C), or the selection of all three options (A and B and C). This may be extended, as readily apparent by one of ordinary skill in this and related arts, for as many items listed.

Moreover, it is to be appreciated that while one or more embodiments of the present principles are described herein with respect to the MPEG-4 AVC standard, the present principles are not limited to solely this standard and, thus, may be utilized with respect to other video coding standards, recommendations, and extensions thereof, including extensions of the MPEG-4 AVC standard.

As used herein, "high level syntax" refers to syntax present in the bitstream that resides hierarchically above the macroblock layer. For example, high level syntax, as used herein, may refer to, but is not limited to, syntax at the slice header level, Supplemental Enhancement Information (SEI) level, Picture Parameter Set (PPS) level, Sequence Parameter Set (SPS) level and Network Abstraction Layer (NAL) unit header level.

Scalable video coding (SVC) is an extension (Annex G) to the MPEG-4 AVC Standard. In SVC, a video signal can be encoded into a base layer and one or more enhancement layers constructed in a pyramidal fashion. An enhancement layer enhances the temporal resolution (i.e., the frame rate), the spatial resolution, or simply the quality of the video content represented by another layer or part thereof. Each layer together with all its dependent layers is one representation of the video signal at a certain spatial resolution, temporal resolution, and quality level. Each layer in combination with all its dependent layers that require decoding the video signal at a certain spatial resolution, temporal resolution and quality level are denoted by an interoperability point (IOP), also referred to as operation points. An SVC bitstream typically has multiple IOPs, due at least in part to the fact that the bitstream is scalable. Such a bitstream may be scalable spatially, temporally, and in Signal-to-Noise Ratio (SNR), for example. Sub-bitstreams, corresponding to the scalable aspects, may be extracted from the bitstream.

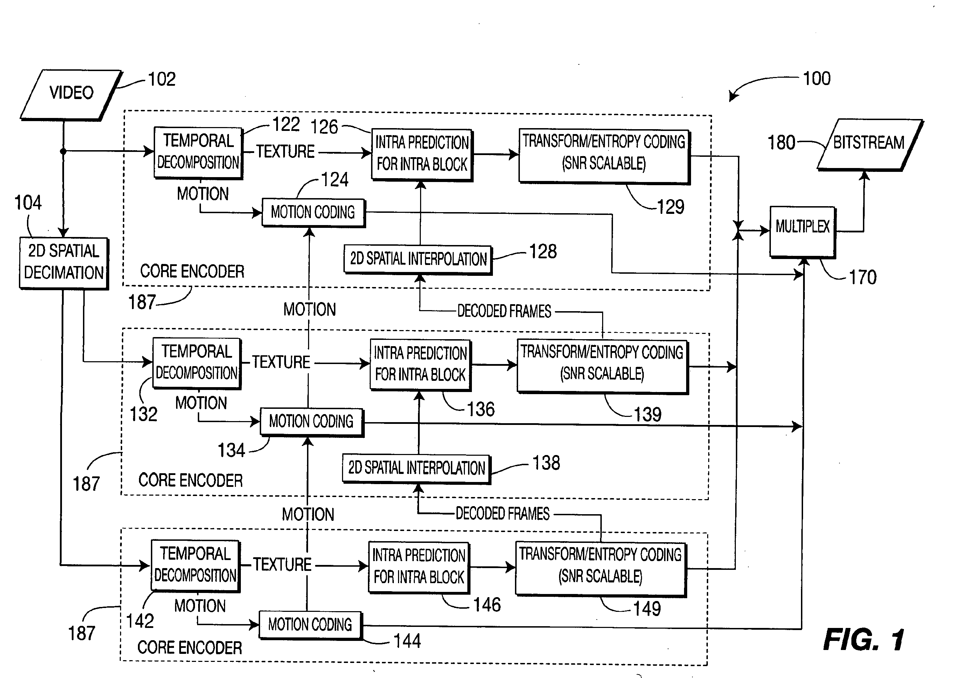

Turning to FIG. 1, an exemplary scalable video encoder to which the present invention may be applied is indicated generally by the reference numeral 100.

A first output of a temporal decomposition module 142 is connected in signal communication with a first input of an intra prediction for intra block module 146. A second output of the temporal decomposition module 142 is connected in signal communication with a first input of a motion coding module 144. An output of the intra prediction for intra block module 146 is connected in signal communication with an input of a transform/entropy coder (signal to noise ratio (SNR) scalable) 149. A first output of the transform/entropy coder 149 is connected in signal communication with a first input of a multiplexer 140.

A first output of a temporal decomposition module 132 is connected in signal communication with a first input of an intra prediction for intra block module 136. A second output of the temporal decomposition module 132 is connected in signal communication with a first input of a motion coding module 134. An output of the intra prediction for intra block module 136 is connected in signal communication with an input of a transform/entropy coder (signal to noise ratio (SNR) scalable) 139. A first output of the transform/entropy coder 139 is connected in signal communication with a first input of a multiplexer 130.

A second output of the transform/entropy coder 149 is connected in signal communication with an input of a 2D spatial interpolation module 138. A second output of the motion coding module 144 is connected in signal communication with an input of the motion coding module 134.

A first output of a temporal decomposition module 122 is connected in signal communication with a first input of an intra predictor 126. A second output of the temporal decomposition module 122 is connected in signal communication with a first input of a motion coding module 124. An output of the intra predictor 126 is connected in signal communication with an input of a transform/entropy coder (signal to noise ratio (SNR) scalable) 129. An output of the transform/entropy coder 129 is connected in signal communication with a first input of a multiplexer 120.

A second output of the transform/entropy coder 139 is connected in signal communication with an input of a 2D spatial interpolation module 128. A second output of the motion coding module 134 is connected in signal communication with an input of the motion coding module 124.

A first output of the motion coding module 124, a first output of the motion coding module 134, and a first output of the motion coding module 144 are each connected in signal communication with a second input of the multiplexer 170.

A first output of a 2D spatial decimation module 104 is connected in signal communication with an input of the temporal decomposition module 132. A second output of the 2D spatial decimation module 104 is connected in signal communication with an input of the temporal decomposition module 142.

An input of the temporal decomposition module 122 and an input of the 2D spatial decimation module 104 are available as inputs of the encoder 100, for receiving input video 102.

An output of the multiplexer 170 is available as an output of the encoder 100, for providing a bitstream 180.

The temporal decomposition module 122, the temporal decomposition module 132, the temporal decomposition module 142, the motion coding module 124, the motion coding module 134, the motion coding module 144, the intra predictor 126, the intra predictor 136, the intra predictor 146, the transform/entropy coder 129, the transform/entropy coder 139, the transform/entropy coder 149, the 2D spatial interpolation module 128, and the 2D spatial interpolation module 138 are included in a core encoder portion 187 of the encoder 100.

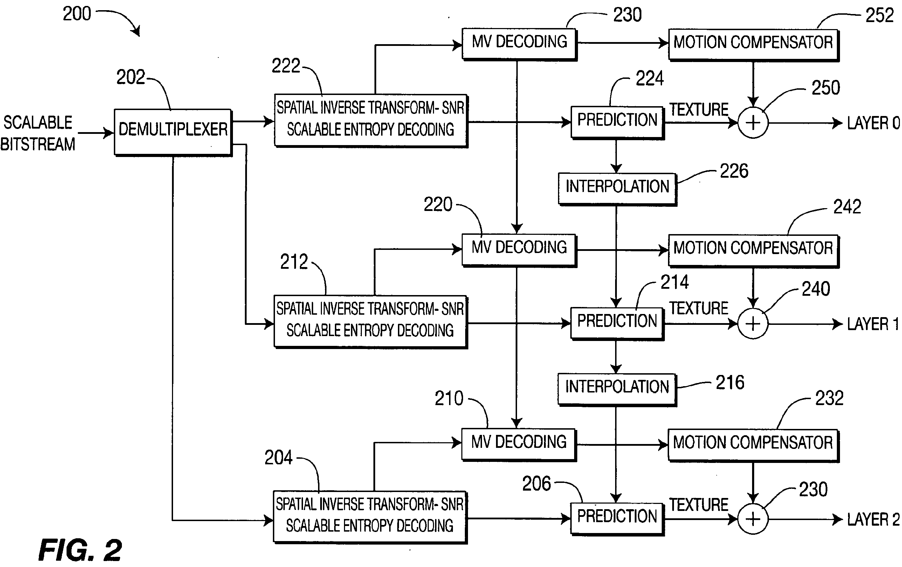

Turning to FIG. 2, an exemplary scalable video decoder to which the present invention may be applied is indicated generally by the reference numeral 200. An input of a demultiplexer 202 is available as an input to the scalable video decoder 200, for receiving a scalable bitstream. A first output of the demultiplexer 202 is connected in signal communication with an input of a spatial inverse transform SNR scalable entropy decoder 204. A first output of the spatial inverse transform SNR scalable entropy decoder 204 is connected in signal communication with a first input of a prediction module 206. An output of the prediction module 206 is connected in signal communication with a first input of a combiner 230.

A second output of the spatial inverse transform SNR scalable entropy decoder 204 is connected in signal communication with a first input of a motion vector (MV) decoder 210. An output of the MV decoder 210 is connected in signal communication with an input of a motion compensator 232. An output of the motion compensator is connected in signal communication with a second input of the combiner 230.

A second output of the demultiplexer 202 is connected in signal communication with an input of a spatial inverse transform SNR scalable entropy decoder 212. A first output of the spatial inverse transform SNR scalable entropy decoder 212 is connected in signal communication with a first input of a prediction module 214. A first output of the prediction module 214 is connected in signal communication with an input of an interpolation module 216. An output of the interpolation module 216 is connected in signal communication with a second input of the prediction module 206. A second output of the prediction module 214 is connected in signal communication with a first input of a combiner 240.

A second output of the spatial inverse transform SNR scalable entropy decoder 212 is connected in signal communication with a first input of an MV decoder 220. A first output of the MV decoder 220 is connected in signal communication with a second input of the MV decoder 210. A second output of the MV decoder 220 is connected in signal communication with an input of a motion compensator 242. An output of the motion compensator 242 is connected in signal communication with a second input of the combiner 240.

A third output of the demultiplexer 202 is connected in signal communication with an input of a spatial inverse transform SNR scalable entropy decoder 222. A first output of the spatial inverse transform SNR scalable entropy decoder 222 is connected in signal communication with an input of a prediction module 224. A first output of the prediction module 224 is connected in signal communication with an input of an interpolation module 226. An output of the interpolation module 226 is connected in signal communication with a second input of the prediction module 214.

A second output of the prediction module 224 is connected in signal communication with a first input of a combiner 250. A second output of the spatial inverse transform SNR scalable entropy decoder 222 is connected in signal communication with an input of an MV decoder 230. A first output of the MV decoder 230 is connected in signal communication with a second input of the MV decoder 220. A second output of the MV decoder 230 is connected in signal communication with an input of a motion compensator 252. An output of the motion compensator 252 is connected in signal communication with a second input of the combiner 250.

An output of the combiner 250 is available as an output of the decoder 200, for outputting a layer 0 signal. An output of the combiner 240 is available as an output of the decoder 200, for outputting a layer 1 signal. An output of the combiner 230 is available as an output of the decoder 200, for outputting a layer 2 signal.

It has been proposed to modify Network Abstraction Layer (NAL) Hypothetical Reference Decoder (HRD) parameters and Virtual Coding Layer (VCL) HRD parameters for the Hypothetical Reference Decoder (HRD) for Scalable Video Coding (SVC). However, without considering other information in VUI, in particular, bitstream restriction information. Therefore, in accordance with the present principles, modifications are proposed for additional VUI information in SVC.

Thus, in accordance with the present principles, we propose to modify MPEG-4 AVC Standard Video Usability Information (VUI) for Scalable Video Coding (SVC). An example, not forming part of the claimed invention; is to define VUI for each interoperability point (IOP) of SVC. In particular, we consider the bitstream restriction information in VUI and how to modify the bitstream restriction information for SVC. We also consider how to use Supplemental Enhancement Information (SEI) messages to convey VUI information for the MPEG-4 AVC Standard compatible case.

Currently, the Hypothetical Reference Decoder parameters in the Video VUI are set for each IOP for Scalable Video Coding, but the other VUI information uses only one set of VUI parameter for the bitstream. Since the decoder is supposed to decode only subsets of the video signals (corresponding to IOPs), the size of the data corresponding to each IOP which is required to be transmitted and decoded varies from IOP to IOP. Therefore, we believe that besides Hypothetical Reference Decoder parameters, some other VUI information should be sent to each TOP or a set of TOPs for some information In particular, we are considering bitstream restriction information in VUI.

In one embodiment, we propose a set of IOPs share the same bitstream restriction information. For example, although not part of the claimed invention, all layers with the same dependency_id share the same bitstream restriction information.

Another example not forming part of the claimed invention is defining the bitstream restriction information for each IOP. An IOP can be uniquely identified by the combination of dependency_id, temporal_id and quality _id. Given i is the index of IOP, the bitstream restriction information includes the following syntax:
**bitstream_restriction_flag** [i] - indicates that the bitstream restriction information for the current scalable layer is present in the SEI message. bitstream_restriction_flag[ i ] equal to 0 specifies that the bitstream restriction information for the scalable layer having the dependency_id equal to dependency_id[ i ], temporal_id equal to temporal_id[ i ] and quality _id equal to quality_id[ i ] is not present in the SEI message.
**motion_vectors_over_pic_boundaries_flag** [i] - specifies the value of motion_vectors_over_pic_boundaries_flag of the scalable layer having the dependency_id equal to dependency_id[ i ], temporal_id equal to temporal_id[ i ] and quality_id equal to quality _id[i]. When the motion_vectors_over_pic_boundaries_flag[ i ] syntax element is not present, motion_vectors_over_pic_boundaries_flag value of the scalable layer having the dependency_id equal to dependency_id[ i ], temporal_id equal to temporal_id[ i ] and quality_id equal to quality_id[ i ] shall be inferred to be equal to 1.
**max_bytes_per_pic_denom** [i] - specifies the max_bytes_per_pic_denom value of the scalable layer having the dependency_id equal to dependency_id[ i ], temporal_id equal to temporal_id[ i ] and quality _id equal to quality_id[ i ]. When the max_bytes_per_pic_denom[ i ] syntax element is not present, the value of max_bytes_per_pic_denom of the scalable layer having the dependency_id equal to dependency_id[ i ], temporal_id equal to temporal_id[ i ] and quality _id equal to quality_id[ i ] shall be inferred to be equal to 2.
**max_bits_per_mb_denom** [i] - specifies the max_bits_per_mb_denom value of the scalable layer having the dependency_id equal to dependency_id[ i ], temporal_id equal to temporal_id[ i ] and quality _id equal to quality _id[i]. When the max_bits_per_mb_denom[ i ] is not present, the value of max_bits_per_mb_denom of the scalable layer having the dependency_id equal to dependency_id[ i ], temporal_id equal to temporal_id[ i ] and quality _id equal to quality_id[ i ] shall be inferred to be equal to 1.
**log2_max_mv_length_horizontal** [i] and **log2_max_mv_length_vertical** [i] - specify the values of log2_max_mv_length_horizontal and log2_max_mv_length_vertical of the scalable layer having the dependency_id equal to dependency_id[ i ], temporal_id equal to temporal_id[ i ] and quality_id equal to quality_id[ i ]. When log2_max_mv_length_horizontal[ i ] is not present, the values of log2_max_mv_length_horizontal and log2_max_mv_length_vertical of the scalable layer having the dependency_id equal to dependency_id[ i ], temporal_id equal to temporal_id[ i ] and quality _id equal to quality_id[ i ] shall be inferred to be equal to 16.
**num_reorder_frames** [i] - specifies the value of num_reorder_frames of the scalable layer having the dependency_id equal to dependency_id[ i ], temporal_id equal to temporal_id[ i ] and quality_id equal to quality_id[ i ]. The value of num_reorder_frames[ i ] shall be in the range of 0 to max _dec_frame_buffering, inclusive. When the num_reorder_frames[ i ] syntax element is not present, the value of num_reorder_frames of the scalable layer having the dependency_id equal to dependency_id[ i ], temporal_id equal to temporal_id[ i ] and quality _id equal to quality_id[ i ] shall be inferred to be equal to max dec frame buffering.
**max_dec_frame_buffering** [i] specifies the value of max_dec_frame_buffering of the scalable layer having the dependency_id equal to dependency_id[ i ], temporal_id equal to temporal_id[ i ] and quality _id equal to quality_id[ i ]. The value of max_dec_frame_buffering[ i ] shall be in the range of num_ref_frames[i] to MaxDpbSize (as specified in sub-clause A.3.1 or A.3.2 in the MPEG-4 AVC Standard), inclusive. When the max _dec_frame_buffering[ i ] syntax element is not present, the value of max_dec_frame_buffering of the scalable layer having the dependency_id equal to dependency_id[ i ], temporal_id equal to temporal_id[ i ] and quality _id equal to quality_id[ i ] shall be inferred to be equal to MaxDpbSize.

Moreover, TABLE 2 includes the VUI syntax for this example relating to defining bitstream restriction information for each IOP.

**TABLE 2**

| | | |
|---|---|---|
| vui_parameters() { | **C** | **Descriptor** |
| **aspect_ratio_info_present_flag** | 0 | u(1) |
| if( aspect_ratio_info_present_flag ) { | | |
| **aspect_ratio_idc** | 0 | u(8) |
| if( aspect_ratio_idc == Extended_SAR ) { | | |
| **sar_width** | 0 | u(16) |
| **sar_height** | 0 | u(16) |
| } | | |
| } | | |
| **overscan_info_present_flag** | 0 | u(1) |
| if( overscan_info_present_flag ) | | |
| **overscan_appropriate_flag** | 0 | u(1) |
| **video_signal_type_present_flag** | 0 | u(1) |
| if( video_signal_type_present_flag ) { | | |
| **video_format** | 0 | u(3) |
| **video_full_range_flag** | 0 | u(1) |
| **colour_description_present_flag** | 0 | u(1) |
| if( colour_description_present_flag ) { | | |
| **colour_primaries** | 0 | u(8) |
| **transfer_characteristics** | 0 | u(8) |
| **matrix_coefficients** | 0 | u(8) |
| } | | |
| } | | |
| **chroma_loc_info_present_flag** | 0 | u(1) |
| if( chroma loc_info_present_flag ) { | | |
| **chroma_sample_loc_type_top_field** | 0 | ue(v) |
| **chroma_sample_loc_type_bottom_field** | 0 | ue(v) |
| } | | |
| if( profile _ide == 'SVC' ) { | | |
| **num_layers_minus1** | 0 | ue(v) |
| for( i = 0; i <= num_layers_minus1; i++ ) { | | |
| **temporal_level[ i ]** | 0 | u(3) |
| **dependency_id[ i ]** | 0 | u(3) |
| **quality_level[ i ]** | 0 | u(2) |
| **timing_info_present_flag[ i ]** | 0 | u(1) |
| if( timing_info_present_flag[ i ] ) { | | |
| **num_units_in_tick[ i ]** | 0 | u(32) |
| **time_scale[ i ]** | 0 | u(32) |
| **fixed_frame_rate_flag[ i ]** | 0 | u(1) |
| } | | |
| **nal_hrd_parameters_present_flag[ i ]** | 0 | u(1) |
| if( nal_hrd_parameters_present_flag[ i ] ) | | |
| hrd_parameters() | | |
| **vcl_hrd_parameters_present_flag[ i ]** | 0 | u(1) |
| if( vcl_hrd_parameters_present_flag[ i ] ) | | |
| hrd_parameters() | | |
| 'if( nal_hrd_parameters_present_flag[ i ] \|\| | | |
| vcl_hrd_parameters_present_flag[ i ] ) | | |
| **low_delay_hrd_flag[ i ]** | 0 | u(1) |
| **pic_struct_present_flag[ i ]** | 0 | u(1) |
| if( bitstream_restriction_flag[ i ] ) { | | |
| **motion_vectors_over_pic_boundaries_flag[ i ]** | 0 | u(1) |
| **max_bytes_per_pic_denom[ i ]** | 0 | ue(v) |
| **max_bits_per_mb_denom[ i ]** | 0 | ue(v) |
| **log2_max_mv_length_horizontal[ i ]** | 0 | ue(v) |
| **log2_max_mv_length_vertical[ i ]** | 0 | ue(v) |
| **num_reorder_frames[ i ]** | 0 | ue(v) |
| **max_dec_frame_buffering[ i ]** | 0 | ue(v) |
| **}** | | |
| } | | |
| } else { | | |
| **timing_info_present_flag** | 0 | u(1) |
| if( timing _info_present_flag ) { | | |
| **num_units_in_tick** | 0 | u(32) |
| **time_scale** | 0 | u(32) |
| **fixed_frame_rate_flag** | 0 | u(1) |
| } | | |
| **nal_hrd_parameters_present_flag** | 0 | u(1) |
| if( nal_hrd_parameters_present_flag ) | | |
| hrd_parameters() | | |
| **vel_hrd_parameters_present_flag** | 0 | u(1) |
| if( vcl hrd_parameters_present_flag ) | | |
| hrd_parameters() | | |
| 'if( nal_hrd_parameters_present_flag vcl__hrd_parameters_present_flag )' | | |
| **low_delay_hrd_flag** | 0 | u(1) |
| **pic_struct_present_flag** | 0 | u(1) |
| } | | |
| **bitstream_restriction_flag** | 0 | u(1) |
| if( bitstream_restriction_flag ) { | | |
| **motion_vectors_over_pic_boundaries_flag** | 0 | u(1) |
| **max_bytes_per_pic_denom** | 0 | ue(v) |
| **max_bits_per_mb_denom** | 0 | ue(v) |
| **log2_ max_mv_length_horizontal** | 0 | ue(v) |
| **log2_max_mv_length_vertical** | 0 | ue(v) |
| **num_reorder_frames** | 0 | ue(v) |
| **max_dec_frame_buffering** | 0 | ue(v) |
| } | | |
| } | | |

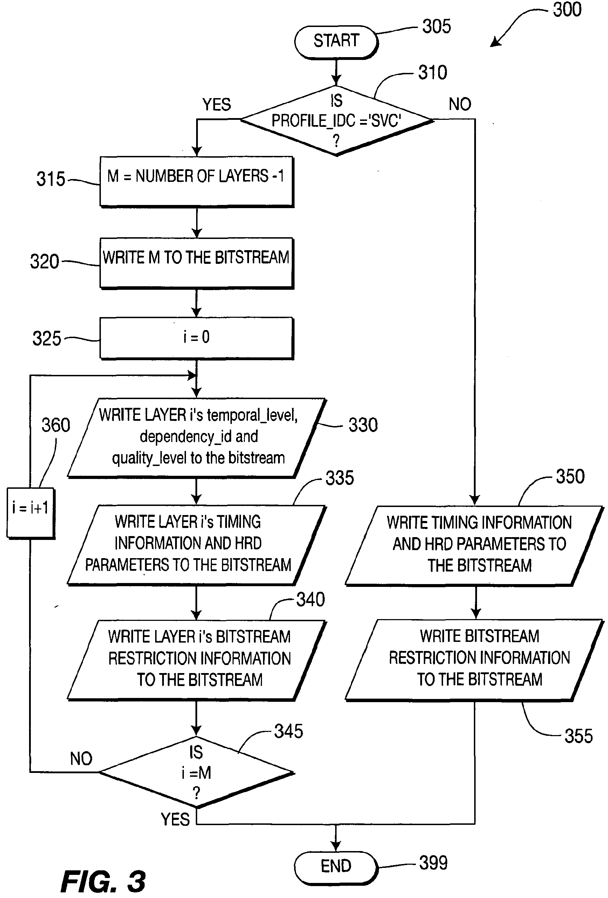

Turning to FIG. 3, an exemplary method for encoding Video User Information (VUI) is indicated generally by the reference numeral 300.

The method 300 includes a start block 305 that passes control to a decision block 310. The decision block 310 determines whether or not profile_idc is equal to SVC. If so, then control is passed to a function block 315. Otherwise, control is passed to a function block 350.

The function block 315 sets a variable M equal to the number of layers - 1, and passes control to a function block 320. The function block 320 writes the variable M to the bitstream, and passes control to the function block 325. The function block 325 sets a variable i equal to zero, and passes control to a function block 330. The function block 330 writes layer i's temporal level, dependency_id, and quality_level to the bitstream, and passes control to a function block 335. The function block 335 writes layer i's timing information and HRD parameters to the bitstream, and passes control to a function block 340. The function block 340 writes layer i's bitstream restriction information to the bitstream, and passes control to a decision block 345. The decision block 345 determines whether or not the variable i is equal to the variable M. If so, control is passed to an end block 399. Otherwise, control is passed to a function block 360.

The function block 350 writes timing information and HRD parameters to the bitstream, and passes control to a function block 355. The function block 355 writes bitstream restriction information to the bitstream, and passes control to the end block 399.

The function block 360 increments the variable i by one, and returns control to the function block 330.

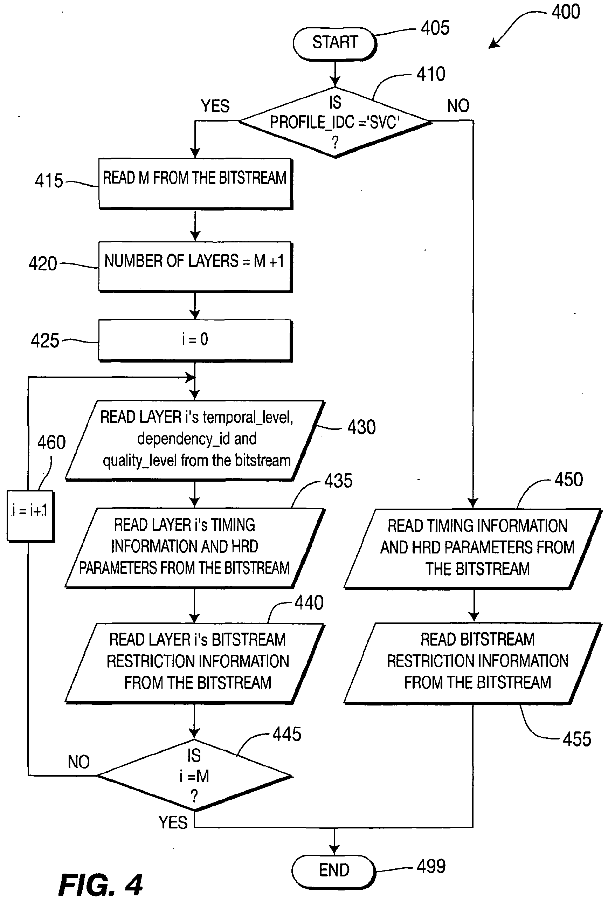

Turning to FIG. 4, an exemplary method for decoding Video User Information (VUI) is indicated generally by the reference numeral 400.

The method 400 includes a start block 405 that passes control to a decision block 410. The decision block 410 determines whether or not profile_idc is equal to SVC. If so, the control is passed to a function block 415. Otherwise, control is passed to a function block 450.

The function block 415 reads a variable M from the bitstream, and passes control to a function block 420. The function block 420 sets the number of layers equal to M + 1, and passes control to a function block 425. The function block 425 sets a variable i equal to zero, and passes control to a function block 430. The function block 430 reads layer i's temporal_level, dependency_id, and quality_level from the bitstream, and passes control to a function block 435. The function block 435 reads layer i's timing information and HRD parameters from the bitstream, and passes control to a function block 440. The function block 440 reads layer i's bitstream restriction information from the bitstream, and passes control to a decision block 445. The decision block 445 determines whether or not the variable i is equal to the variable M. If so, the control is passed to an end block 499. Otherwise, control is passed to a function block 460.

The function block 450 reads timing information and HRD parameters from the bitstream, and passes control to a function block 455. The function block 455 reads bitstream restriction information from the bitstream, and passes control to the end block 499.

The function block 460 increments the variable i by one, and returns control to the function block 430.

SVC required the base layer to be compatible with the MPEG-4 AVC Standard. However, the MPEG-4 AVC Standard compatible bitstream may include several temporal layers. According to an embodiment of the present principles, we propose to use high level syntax to convey the bitstream restriction information for different temporal layers in an MPEG-4 AVC Standard compatible layer. In one embodiment, a Supplemental Enhancement Information (SEI) message is used. Of course, the present principles are not limited solely to the use of SEI messages with respect to high level syntax and, thus, other high level syntaxes may also be used in accordance with the present principles, while maintaining the scope of the claimed invention.

TABLE 3 illustrates a proposed AVC temporal Video User Information (VUI) Supplemental Enhancement Information (SEI) message, in accordance with an embodiment of the present principles. The following syntax definitions apply to the syntaxes set forth in TABLE 3.

**TABLE 3**

| | | |
|---|---|---|
| avc_temporal_vui ( payloadSize ) { | **C** | **Descriptor** |
| **num_of_temporal_layers_in_base_layer_minus1** | 0 | ue(v) |
| for( i = 0; i < num_of_temporal_layers_in_base_layer_minus1; i++ ) { | | |
| **temporal_level[ i ]** | 0 | u(3) |
| **bitstream_restriction_flag** | 0 | u(1) |
| if( bitstream_restriction_flag ) { | | |
| **motion_vectors_over_pic_boundaries_flag** | 0 | u(1) |
| **max_bytes_per_pic_denom** | 0 | ue(v) |
| **max_bits_per_mb_denom** | 0 | ue(v) |
| **log2_ max_mv_length_horizontal** | 0 | ue(v) |
| **log2_max_mv_length_vertical** | 0 | ue(v) |
| **num_reorder_frames** | 0 | ue(v) |
| **max_dec_frame_buffering** | 0 | ue(v) |
| } | | |
| } | | |
| } | | |

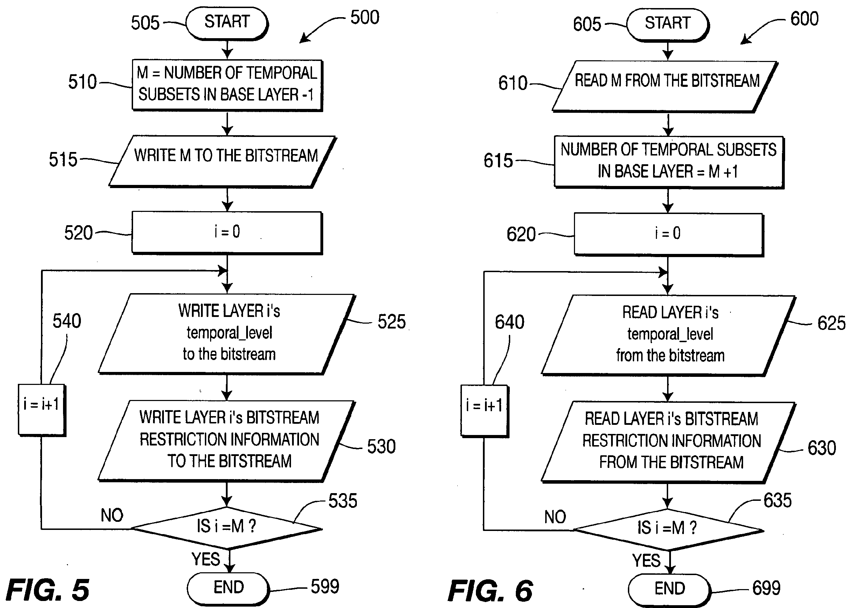

Turning to FIG. 5, an exemplary method for encoding an MPEG-4 AVC Standard temporal Supplemental Enhancement Information (SEI) message is indicated generally by the reference numeral 500.

The method 500 includes a start block 505 that passes control to a function block 510. The function block 510 sets a variable M equal to the number of temporal subsets in the base layer - 1, and passes control to a function block 515. The function block 515 writes the variable M to the bitstream, and passes control to a function block 520. The function block 520 sets a variable i equal to zero, and passes control to a function block 525. The function block 525 writes layer i's temporal_level to the bitstream, and passes control to a function block 530. The function block 530 writes layer i's bitstream restriction information to the bitstream, and passes control to a decision block 535. The decision block 535 determines whether or not the variable i is equal to the variable M. If so, the control is passed to an end block 599. Otherwise, control is passed to a function block 540. The function block 540 increments the variable i by one, and returns control to the function block 525.

Turning to FIG. 6, an exemplary method for decoding an MPEG-4 AVC Standard temporal Supplemental Enhancement Information (SEI) message is indicated generally by the reference numeral 600.

The method 600 includes a start block 605 that passes control to a function block 610. The function block 610 reads a variable M from the bitstream, and passes control to a function block 615. The function block 615 sets the number of temporal subsets in the base layer equal to the variable M + 1, and passes control to a function block 620. The function block 620 sets a variable i equal to zero, and passes control to a function block 625. The function block 625 reads layer i's temporal _level from the bitstream, and passes control to a function block 630. The function block 630 reads layer i's bitstream restriction information from the bitstream, and passes control to a decision block 635. The decision block 635 determines whether or not the variable i is equal to the variable M. If so, the control is passed to an end block 699. Otherwise, control is passed to a function block 640.

The function block 640 increments the variable i by one, and returns control to the function block 625.

TABLE 4 shows another implementation of the bitstream restriction information in Scalability information SEI message, not being part of the claimed invention.

**TABLE 4**

| | | |
|---|---|---|
| scalability_info( payloadSize ) { | **C** | **Descriptor** |
| **temporal_id_nesting_flag** | 5 | u(1) |
| **quality_layer_info_present_flag** | 5 | u(1) |
| **priority_id_setting_flag** | 5 | u(1) |
| **num_layers_minus1** | 5 | ue(v) |
| for( i = 0; i <= num_layers_minus1; i++ ) { | | |
| **layer_id[ i]** | 5 | ue(v) |
| **priority_id[ i ]** | 5 | u(6) |
| **discardable_flag[ i ]** | 5 | u(1) |
| **temporal_id[ i ]** | 5 | u(3) |
| **dependency_id[ i ]** | 5 | u(3) |
| **quality_id[ i ]** | 5 | u(4) |
| ... | | |
| **bitstream_restriction_info_present_flag[ i ]** | 5 | u(1) |
| if( bitstream_restriction_info_present_flag[ i ] ) { | | |
| **motion_vectors_over_pic_boundaries_flag[ i ]** | 5 | u(1) |
| **max_bytes_per_pic_denom[ i ]** | 5 | ue(v) |
| **max_bits_per_mb_denom[ i ]** | 5 | ue(v) |
| **log2_max_mv_length_horizontal[ i ]** | 5 | ue(v) |
| **log2_max_mv_length_vertical[ i ]** | 5 | ue(v) |
| **num_reorder_frames[ i ]** | 5 | ue(v) |
| **max_dec_frame_buffering[ i ]** | 5 | ue(v) |
| } | | |
| ... | | |
| } | | |
| } | | |

A description will now be given of some of the many attendant advantages/features of the present invention, some of which have been mentioned above. For example, one advantage/feature is an apparatus that includes an encoder for encoding video signal data into a bitstream. The encoder specifies video user information, excluding hypothetical reference decoder parameters, in the bitstream using a high level syntax element. The video user information corresponds to a set of interoperability points in the bitstream relating to scalable video coding.

Another advantage/feature is the apparatus having the encoder as described above, wherein the encoder specifies the video user information for each of the interoperability points in the bitstream relating to scalable video coding, including the set of interoperability points, using the high level syntax element.

Yet another advantage/feature is the apparatus having the encoder as described above, wherein the encoder specifies the video user information for each of the interoperability points relating to scalable video coding at a layer compatible with the International Organization for Standardization/International Electrotechnical Commission Moving Picture Experts Group-4 Part 10 Advanced Video Coding standard/International Telecommunication Union, Telecommunication Sector H.264 recommendation, using the high level syntax element.

Still another advantage/feature is the apparatus having the encoder as described above, wherein the video user information includes bitstream restriction information.

Moreover, another advantage/feature is the apparatus having the encoder wherein the video user information includes bitstream restriction information as described above, wherein the bitstream restriction information includes at least one of a motion_vectors_over_pic_boundaries_flag syntax element, a max _bytes_per_pic_denom syntax element, a max_bits_per_mb_denom syntax element, a log2_max_mv_length_horizontal syntax element, a log2_max_mv_length_vertical syntax element, a num_reorder_frames syntax element, and a max_dec_frame_buffering syntax element.

Further, another advantage/feature is the apparatus having the encoder as described above, wherein the high level syntax element corresponds to at least at one of a slice header level, a sequence parameter set level, a picture parameter set level, a network abstraction layer unit header level, and a level corresponding to a supplemental enhancement information message.

Also, another advantage/feature is the apparatus having the encoder as described above, wherein a profile _ide syntax element is used to differentiate the bitstream for scalable video coding or for compliance with the International Organization for Standardization/International Electrotechnical Commission Moving Picture Experts Group-4 Part 10 Advanced Video Coding standard/International Telecommunication Union, Telecommunication Sector H.264 recommendation.

Additionally, another advantage/feature is the apparatus having the encoder as described above, wherein the encoder writes a dependency_id syntax element, a temporal _level syntax element, and a quality_level syntax element to the bitstream for at least each of the interoperability points in the set.

Moreover, another advantage/feature is the apparatus having the encoder as described above, wherein the encoder writes a temporal _level syntax element and a quality_level syntax element to the bitstream for at least each of the interoperability points in the set.

Further, another advantage/feature is the apparatus having the encoder as described above, wherein the encoder writes a temporal _level syntax element to the bitstream for at least each of the interoperability points in the set.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

## Claims

1. A method, comprising:
encoding video signal data into a bitstream, said bitstream including a plurality of interoperability points relating to scalable video coding, said bitstream being scalable spatially, temporally and in quality, and wherein each interoperability point corresponds to a scalable layer in combination with all its dependent layers and is uniquely identified by a combination of dependency_id, temporal_id and quality_id, wherein said temporal_id indicates a temporal level; and
specifying a plurality of bitstream restriction information in the bitstream using a parameter set,
wherein said bitstream includes a plurality of temporal levels and said parameter set indicates a number of temporal levels,
wherein a bitstream restriction information is specified for each temporal level in said bitstream, and
wherein each of said plurality of bitstream restriction information includes at least one of a plurality of syntax elements, wherein the plurality of syntax elements specify:
(1) if the motion is over picture boundary,
(2) maximal number of bytes per picture,
(3) maximal number of bits per macroblock,
(4) maximal motion vector length,
(5) maximal number of reordering frames, and
(6) maximal decoded frame buffer size,
wherein all scalable layers with the same temporal level share the same bitstream restriction information.

2. The method of claim 1, further comprising writing one or more of: (1) a syntax element indicative of dependency ID, (2) a syntax element indicative of temporal level, and (3) a syntax element indicative of quality level to said bitstream for each interoperability point in said bitstream .

3. A method, comprising:
accessing a bitstream including a plurality of interoperability points relating to scalable video coding, said bitstream being scalable spatially, temporally and in quality, and wherein each interoperability point corresponds to a scalable layer in combination with all its dependent layers, and is uniquely identified by a combination of dependency_id, temporal_id and quality_id, wherein said temporal_id indicates a temporal level;
determining a plurality of bitstream restriction information from a parameter set in said bitstream,
wherein said bitstream includes a plurality of temporal levels and said parameter set indicates a number of temporal levels,
wherein a bitstream restriction information is specified for each temporal level in said bitstream, and
wherein each of said plurality of bitstream restriction information includes at least one of a plurality of syntax elements, wherein the plurality of syntax elements specify:
(1) if the motion is over picture boundary,
(2) maximal number of bytes per picture,
(3) maximal number of bits per macroblock,
(4) maximal motion vector length,
(5) maximal number of reordering frames, and
(6) maximal decoded frame buffer size,
wherein all scalable layers with the same temporal level share the same bitstream restriction information; and
decoding at least one interoperability point from said bitstream.

4. The method of claim 3, further comprising reading one or more of (1) a syntax element indicative of dependency ID, (2) a syntax element indicative of temporal level, and (3) a syntax element indicative of quality level from said bitstream for each interoperability point in said bitstream.

5. The method of claim 1 or 3, wherein a first one of said plurality of bitstream restriction information is specified for a first subset of said plurality of interoperability points, said first subset of interoperability points corresponding to all layers having a first same temporal level,
wherein a second one of said plurality of bitstream restriction information is specified for a second subset of said plurality of interoperability points, said second subset of interoperability points corresponding to all layers having a second same temporal level.

6. The method of any one of claims 3 -5, wherein a bitstream restriction information is used instead of level information to set decoding requirements for a corresponding interoperability point.

7. An apparatus, comprising:
at least a memory and one or more processors coupled to said at least a memory, wherein said one or more processors are configured to:
specify a plurality of bitstream restriction information using a parameter set into a bitstream, said bitstream being scalable spatially, temporally and in quality, and wherein each interoperability point corresponds to a scalable layer in combination with all its dependent layers,and is uniquely identified by a combination of dependency_id, temporal_id and quality_id, wherein said temporal_id indicates a temporal level; and
encode video signal data into said bitstream, said bitstream including a plurality of interoperability points relating to scalable video coding,
wherein said bitstream includes a plurality of temporal levels and said parameter set indicates a number of temporal levels,
wherein a bitstream restriction information is specified for each temporal level in said bitstream, and
wherein each of said plurality of bitstream restriction information includes at least one of a plurality of syntax elements, wherein the plurality of syntax elements specify:
(1) if the motion is over picture boundary,
(2) maximal number of bytes per picture,
(3) maximal number of bits per macroblock,
(4) maximal motion vector length,
(5) maximal number of reordering frames, and
(6) maximal decoded frame buffer size,
wherein all scalable layers with the same temporal level share the same bitstream restriction information.

8. The apparatus of claim 7, wherein said one or more processors are configured to write one or more of (1) a syntax element indicative of dependency ID, (2) a syntax element indicative of temporal level, and (3) a syntax element indicative of quality level to said bitstream for each interoperability point in said bitstream.

9. An apparatus, comprising:
at least a memory and one or more processors coupled to said at least a memory, wherein said one or more processors are configured to:
determine a plurality of bitstream restriction information from a parameter set in a bitstream, said bitstream being scalable spatially, temporally and in quality, and wherein each interoperability point corresponds to a scalable layer in combination with all its dependent layers, and is uniquely identified by a combination of dependency_id, temporal_id and quality_id, wherein said temporal_id indicates a temporal level,
wherein said bitstream includes a plurality of interoperability points relating to scalable video coding,
wherein said bitstream includes a plurality of temporal levels and said parameter set indicates a number of temporal levels,
wherein a bitstream restriction information is specified for each temporal level in said bitstream, and
wherein each of said plurality of bitstream restriction information includes at least one of a plurality of syntax elements, wherein the plurality of syntax elements specify:
(1) if the motion is over picture boundary,
(2) maximal number of bytes per picture,
(3) maximal number of bits per macroblock,
(4) maximal motion vector length,
(5) maximal number of reordering frames, and
(6) maximal decoded frame buffer size,
wherein all scalable layers with the same temporal level share the same bitstream restriction information; and
decoding at least one interoperability point from said bitstream.

10. The apparatus of claim 9, wherein said one or more processors are configured to read one or more of (1) a syntax element indicative of dependency ID, (2) a syntax element indicative of temporal level, and (3) a syntax element indicative of quality level from said bitstream for each of said interoperability points in said bitstream.

11. The apparatus of any one of claims 9-10, wherein a bitstream restriction information is used instead of level information to set decoding requirements for a corresponding interoperability point.

12. The apparatus of claim 7 or 9, wherein a first one of said plurality of bitstream restriction information is specified for a first subset of said plurality of interoperability points, said first subset of interoperability points corresponding to all layers having a first same temporal level,
wherein a second one of said plurality of bitstream restriction information is specified for a second subset of said plurality of interoperability points, said second subset of interoperability points corresponding to all layers having a second same temporal level.

13. A bitstream, comprising:
video signal data encoded into a bitstream, said bitstream including a plurality of interoperability points relating to scalable video coding, said bitstream being scalable spatially, temporally and in quality, and wherein each interoperability point corresponds to a scalable layer in combination with all its dependent layers, and is uniquely identified by a combination of dependency_id, temporal_id and quality_id, wherein said temporal_id indicates a temporal level,
wherein a plurality of bitstream restriction information is encoded in the bitstream using a parameter set,
wherein said bitstream includes a plurality of temporal levels and said parameter set indicates a number of temporal levels,
wherein a bitstream restriction information is specified for each temporal level in said bitstream, and
wherein each of said plurality of bitstream restriction information includes at least one of a plurality of syntax elements, wherein the plurality of syntax elements specify:
(1) if the motion is over picture boundary,
(2) maximal number of bytes per picture,
(3) maximal number of bits per macroblock,
(4) maximal motion vector length,
(5) maximal number of reordering frames, and
(6) maximal decoded frame buffer size,
wherein all scalable layers with the same temporal level share the same bitstream restriction information.

## Patentansprüche

1. Verfahren, umfassend:
Codieren von Videosignaldaten zu einem Bitstrom, wobei der Bitstrom mehrere Interoperabilitätspunkte in Bezug auf skalierbare Videocodierung enthält, wobei der Bitstrom räumlich, zeitlich und in der Qualität skalierbar ist,
und wobei jeder Interoperabilitätspunkt einer skalierbaren Schicht in Kombination mit all ihren abhängigen Schichten entspricht und durch eine Kombination aus dependency_id, temporal_id und quality_id eindeutig identifiziert wird, wobei die temporal_id eine zeitliche Ebene angibt; und
Spezifizieren mehrerer Bitstrom-Beschränkungsinformationen in dem Bitstrom unter Verwendung eines Parametersatzes,
wobei der Bitstrom mehrere zeitliche Ebenen enthält und der Parametersatz eine Anzahl von zeitlichen Ebenen angibt,
wobei eine Bitstrom-Beschränkungsinformation für jede zeitliche Ebene in dem Bitstrom spezifiziert wird, und
wobei jede der mehreren Bitstrom-Beschränkungsinformationen mindestens eines von mehreren Syntaxelementen enthält, wobei die mehreren Syntaxelemente spezifizieren:
(1) ob die Bewegung über die Bildgrenze hinausgeht,
(2) die maximale Anzahl von Bytes pro Bild,
(3) die maximale Anzahl von Bits pro Makroblock,
(4) die maximale Länge des Bewegungsvektors,
(5) die maximale Anzahl von Neuordnungs-Frames, und
(6) die maximale Größe des Puffers für decodierte Frames,
wobei alle skalierbaren Schichten mit derselben zeitlichen Ebene dieselben Bitstrom-Beschränkungsinformationen gemeinsam nutzen.

2. Verfahren nach Anspruch 1, des Weiteren umfassend das Schreiben eines oder mehrerer von: (1) einem Syntaxelement, das eine Abhängigkeits-ID angibt, (2) einem Syntaxelement, das eine zeitliche Ebene angibt, und (3) einem Syntaxelement, das eine Qualitätsebene angibt, für jeden Interoperabilitätspunkt in dem Bitstrom in den Bitstrom.

3. Verfahren, umfassend:
Zugreifen auf einen Bitstrom, der mehrere Interoperabilitätspunkte in Bezug auf skalierbare Videocodierung enthält, wobei der Bitstrom räumlich, zeitlich und in der Qualität skalierbar ist, und wobei jeder Interoperabilitätspunkt einer skalierbaren Schicht in Kombination mit all ihren abhängigen Schichten entspricht und durch eine Kombination aus dependency_id, temporal_id und quality_id eindeutig identifiziert wird, wobei die temporal_id eine zeitliche Ebene angibt;
Bestimmen mehrerer Bitstrom-Beschränkungsinformationen aus einem Parametersatz in dem Bitstrom,
wobei der Bitstrom mehrere zeitliche Ebenen enthält und der Parametersatz eine Anzahl von zeitlichen Ebenen angibt,
wobei eine Bitstrom-Beschränkungsinformation für jede zeitliche Ebene in dem Bitstrom spezifiziert wird, und
wobei jede der mehreren Bitstrom-Beschränkungsinformationen mindestens eines von mehreren Syntaxelementen enthält, wobei die mehreren Syntaxelemente spezifizieren:
(1) ob die Bewegung über die Bildgrenze hinausgeht,
(2) die maximale Anzahl von Bytes pro Bild,
(3) die maximale Anzahl von Bits pro Makroblock,
(4) die maximale Länge des Bewegungsvektors,
(5) die maximale Anzahl von Neuordnungs-Frames, und
(6) die maximale Größe des Puffers für decodierte Frames,
wobei alle skalierbaren Schichten mit derselben zeitlichen Ebene dieselben Bitstrom-Beschränkungsinformationen gemeinsam nutzen; und
Decodieren mindestens eines Interoperabilitätspunktes aus dem Bitstrom.

4. Verfahren nach Anspruch 3, des Weiteren umfassend das Lesen eines oder mehrerer von (1) einem Syntaxelement, das eine Abhängigkeits-ID angibt, (2) einem Syntaxelement, das eine zeitliche Ebene angibt, und (3) einem Syntaxelement, das eine Qualitätsebene angibt, für jeden Interoperabilitätspunkt in dem Bitstrom aus dem Bitstrom.

5. Verfahren nach Anspruch 1 oder 3, wobei eine erste der mehreren Bitstrom-Beschränkungsinformationen für eine erste Teilmenge der mehreren Interoperabilitätspunkte spezifiziert wird, wobei die erste Teilmenge von Interoperabilitätspunkten allen Schichten entspricht, die eine erste selbe zeitliche Ebene aufweisen,
wobei eine zweite der mehreren Bitstrom-Beschränkungsinformationen für eine zweite Teilmenge der mehreren Interoperabilitätspunkte spezifiziert wird, wobei die zweite Teilmenge von Interoperabilitätspunkten allen Schichten entspricht, die eine zweite selbe zeitliche Ebene aufweisen.

6. Verfahren nach einem der Ansprüche 3-5, wobei anstelle von Ebeneninformationen eine Bitstrom-Beschränkungsinformation verwendet wird, um Decodierungsanforderungen für einen entsprechenden Interoperabilitätspunkt einzustellen.

7. Vorrichtung, umfassend:
mindestens einen Speicher und einen oder mehrere Prozessoren, die mit dem mindestens einen Speicher gekoppelt sind, wobei der eine oder die mehreren Prozessoren eingerichtet sind zum:
Spezifizieren mehrerer Bitstrom-Beschränkungsinformationen unter Verwendung eines Parametersatzes zu einem Bitstrom, wobei der Bitstrom räumlich, zeitlich und in der Qualität skalierbar ist, und wobei jeder Interoperabilitätspunkt einer skalierbaren Schicht in Kombination mit all ihren abhängigen Schichten entspricht und durch eine Kombination aus dependency_id, temporal_id und quality_id eindeutig identifiziert wird, wobei die temporal_id eine zeitliche Ebene angibt; und
Codieren von Videosignaldaten zu dem Bitstrom, wobei der Bitstrom mehrere Interoperabilitätspunkte in Bezug auf skalierbare Videocodierung enthält,
wobei der Bitstrom mehrere zeitliche Ebenen enthält und der Parametersatz eine Anzahl von zeitlichen Ebenen angibt,
wobei eine Bitstrom-Beschränkungsinformation für jede zeitliche Ebene in dem Bitstrom spezifiziert wird, und
wobei jede der mehreren Bitstrom-Beschränkungsinformationen mindestens eines von mehreren Syntaxelementen enthält, wobei die mehreren Syntaxelemente spezifizieren:
(1) ob die Bewegung über die Bildgrenze hinausgeht,
(2) die maximale Anzahl von Bytes pro Bild,
(3) die maximale Anzahl von Bits pro Makroblock,
(4) die maximale Länge des Bewegungsvektors,
(5) die maximale Anzahl von Neuordnungs-Frames, und
(6) die maximale Größe des Puffers für decodierte Frames,
wobei alle skalierbaren Schichten mit derselben zeitlichen Ebene dieselben Bitstrom-Beschränkungsinformationen gemeinsam nutzen.

8. Vorrichtung nach Anspruch 7, wobei der eine oder die mehreren Prozessoren dazu eingerichtet sind, eines oder mehrere von (1) einem Syntaxelement, das eine Abhängigkeits-ID angibt, (2) einem Syntaxelement, das eine zeitliche Ebene angibt, und (3) einem Syntaxelement, das eine Qualitätsebene angibt, für jeden Interoperabilitätspunkt in dem Bitstrom in den Bitstrom zu schreiben.

9. Vorrichtung, umfassend:
mindestens einen Speicher und einen oder mehrere Prozessoren, die mit dem mindestens einen Speicher gekoppelt sind, wobei der eine oder die mehreren Prozessoren eingerichtet sind zum:
Bestimmen mehrerer Bitstrom-Beschränkungsinformationen aus einem Parametersatz in einem Bitstrom, wobei der Bitstrom räumlich, zeitlich und in der Qualität skalierbar ist, und wobei jeder Interoperabilitätspunkt einer skalierbaren Schicht in Kombination mit all ihren abhängigen Schichten entspricht und durch eine Kombination aus dependency_id, temporal_id und
quality_id eindeutig identifiziert wird, wobei die temporal_id eine zeitliche Ebene angibt,
wobei der Bitstrom mehrere Interoperabilitätspunkte in Bezug auf skalierbare Videocodierung enthält,
wobei der Bitstrom mehrere zeitliche Ebenen enthält und der Parametersatz eine Anzahl von zeitlichen Ebenen angibt,
wobei eine Bitstrom-Beschränkungsinformation für jede zeitliche Ebene in dem Bitstrom spezifiziert wird, und
wobei jede der mehreren Bitstrom-Beschränkungsinformationen mindestens eines von mehreren Syntaxelementen enthält, wobei die mehreren Syntaxelemente spezifizieren:
(1) ob die Bewegung über die Bildgrenze hinausgeht,
(2) die maximale Anzahl von Bytes pro Bild,
(3) die maximale Anzahl von Bits pro Makroblock,
(4) die maximale Länge des Bewegungsvektors,
(5) die maximale Anzahl von Neuordnungs-Frames, und
(6) die maximale Größe des Puffers für decodierte Frames,
wobei alle skalierbaren Schichten mit derselben zeitlichen Ebene dieselben Bitstrom-Beschränkungsinformationen gemeinsam nutzen; und
Decodieren mindestens eines Interoperabilitätspunktes aus dem Bitstrom.

10. Vorrichtung nach Anspruch 9, wobei der eine oder die mehreren Prozessoren dazu eingerichtet sind, eines oder mehrere von (1) einem Syntaxelement, das eine Abhängigkeits-ID angibt, (2) einem Syntaxelement, das eine zeitliche Ebene angibt, und (3) einem Syntaxelement, das eine Qualitätsebene angibt, für jeden Interoperabilitätspunkt in dem Bitstrom aus dem Bitstrom zu lesen.

11. Vorrichtung nach einem der Ansprüche 9-10, wobei anstelle von Ebeneninformationen eine Bitstrom-Beschränkungsinformation verwendet wird, um Decodierungsanforderungen für einen entsprechenden Interoperabilitätspunkt einzustellen.

12. Vorrichtung nach Anspruch 7 oder 9, wobei eine erste der mehreren Bitstrom-Beschränkungsinformationen für eine erste Teilmenge der mehreren Interoperabilitätspunkte spezifiziert wird, wobei die erste Teilmenge von Interoperabilitätspunkten allen Schichten entspricht, die eine erste selbe zeitliche Ebene aufweisen,
wobei eine zweite der mehreren Bitstrom-Beschränkungsinformationen für eine zweite Teilmenge der mehreren Interoperabilitätspunkte spezifiziert wird, wobei die zweite Teilmenge von Interoperabilitätspunkten allen Schichten entspricht, die eine zweite selbe zeitliche Ebene aufweisen.

13. Bitstream, umfassend:
Videosignaldaten, die zu einem Bitstrom codiert sind, wobei der Bitstrom mehrere Interoperabilitätspunkte in Bezug auf skalierbare Videocodierung enthält, wobei der Bitstrom räumlich, zeitlich und in der Qualität skalierbar ist,
und wobei jeder Interoperabilitätspunkt einer skalierbaren Schicht in Kombination mit all ihren abhängigen Schichten entspricht und durch eine Kombination aus dependency_id, temporal_id und quality_id eindeutig identifiziert wird, wobei die temporal_id eine zeitliche Ebene angibt,
wobei mehrere Bitstrom-Beschränkungsinformationen unter Verwendung eines Parametersatzes in dem Bitstrom codiert sind,
wobei der Bitstrom mehrere zeitliche Ebenen enthält und der Parametersatz eine Anzahl von zeitlichen Ebenen angibt,
wobei eine Bitstrom-Beschränkungsinformation für jede zeitliche Ebene in dem Bitstrom spezifiziert wird, und
wobei jede der mehreren Bitstrom-Beschränkungsinformationen mindestens eines von mehreren Syntaxelementen enthält, wobei die mehreren Syntaxelemente spezifizieren:
(1) ob die Bewegung über die Bildgrenze hinausgeht,
(2) die maximale Anzahl von Bytes pro Bild,
(3) die maximale Anzahl von Bits pro Makroblock,
(4) die maximale Länge des Bewegungsvektors,
(5) die maximale Anzahl von Neuordnungs-Frames, und
(6) die maximale Größe des Puffers für decodierte Frames,
wobei alle skalierbaren Schichten mit derselben zeitlichen Ebene dieselben Bitstrom-Beschränkungsinformationen gemeinsam nutzen.

## Revendications

1. Procédé, comprenant :
le codage de données de signal vidéo dans un flux binaire, ledit flux binaire incluant une pluralité de points d'interopérabilité relatifs à un codage vidéo évolutif, ledit flux binaire étant évolutif spatialement, temporellement et en qualité, et dans lequel chaque point d'interopérabilité correspond à une couche évolutive en combinaison avec toutes ses couches dépendantes et est identifié de manière unique par une combinaison de dependency_id, temporal_id et quality_id, dans lequel ledit temporal_id indique un niveau temporel ; et
la spécification d'une pluralité d'informations de restriction de flux binaire dans le flux binaire à l'aide d'un ensemble de paramètres,
dans lequel ledit flux binaire inclut une pluralité de niveaux temporels et ledit ensemble de paramètres indique un nombre de niveaux temporels,
dans lequel des informations de restriction de flux binaire sont spécifiées pour chaque niveau temporel dans ledit flux binaire, et
dans lequel chacune de ladite pluralité d'informations de restriction de flux binaire inclut au moins l'un d'une pluralité d'éléments de syntaxe, dans lequel la pluralité d'éléments de syntaxe spécifie :
(1) si le mouvement est sur une frontière d'image,
(2) un nombre maximal d'octets par image,
(3) un nombre maximal de bits par macrobloc,
(4) une longueur maximale de vecteur de mouvement,
(5) un nombre maximal de trames de réorganisation, et
(6) une taille maximale de tampon de trames décodées,
dans lequel toutes les couches évolutives avec le même niveau temporel partagent les mêmes informations de restriction de flux binaire.

2. Procédé selon la revendication 1, comprenant en outre l'écriture d'un ou plusieurs parmi : (1) un élément de syntaxe indiquant un identifiant de dépendance, (2) un élément de syntaxe indiquant un niveau temporel, et (3) un élément de syntaxe indiquant un niveau de qualité audit flux binaire pour chaque point d'interopérabilité dans ledit flux binaire.

3. Procédé, comprenant :
l'accès à un flux binaire incluant une pluralité de points d'interopérabilité relatifs à un codage vidéo évolutif, ledit flux binaire étant évolutif spatialement, temporellement et en qualité, et dans lequel chaque point d'interopérabilité correspond à une couche évolutive en combinaison avec toutes ses couches dépendantes et est identifié de manière unique par une combinaison de dependency_id, temporal_id et quality_id, dans lequel ledit temporal_id indique un niveau temporel ;
la détermination d'une pluralité d'informations de restriction de flux binaire à partir d'un ensemble de paramètres dans ledit flux binaire,
dans lequel ledit flux binaire inclut une pluralité de niveaux temporels et ledit ensemble de paramètres indique un nombre de niveaux temporels,
dans lequel des informations de restriction de flux binaire sont spécifiées pour chaque niveau temporel dans ledit flux binaire, et
dans lequel chacune de ladite pluralité d'informations de restriction de flux binaire inclut au moins l'un d'une pluralité d'éléments de syntaxe, dans lequel la pluralité d'éléments de syntaxe spécifie :
(1) si le mouvement est sur une frontière d'image,
(2) un nombre maximal d'octets par image,
(3) un nombre maximal de bits par macrobloc,
(4) une longueur maximale de vecteur de mouvement,
(5) un nombre maximal de trames de réorganisation, et
(6) une taille maximale de tampon de trames décodées,
dans lequel toutes les couches évolutives avec le même niveau temporel partagent les mêmes informations de restriction de flux binaire ; et
le décodage d'au moins un point d'interopérabilité à partir dudit flux binaire.

4. Procédé selon la revendication 3, comprenant en outre la lecture d'un ou plusieurs parmi : (1) un élément de syntaxe indiquant un identifiant de dépendance, (2) un élément de syntaxe indiquant un niveau temporel, et (3) un élément de syntaxe indiquant un niveau de qualité dudit flux binaire pour chaque point d'interopérabilité dans ledit flux binaire.

5. Procédé selon la revendication 1 ou 3, dans lequel une première de ladite pluralité d'informations de restriction de flux binaire est spécifiée pour un premier sous-ensemble de ladite pluralité de points d'interopérabilité, ledit premier sous-ensemble de points d'interopérabilité correspondant à toutes les couches présentant un même premier niveau temporel,
dans lequel une deuxième de ladite pluralité d'informations de restriction de flux binaire est spécifiée pour un deuxième sous-ensemble de ladite pluralité de points d'interopérabilité, ledit deuxième sous-ensemble de points d'interopérabilité correspondant à toutes les couches présentant un même deuxième niveau temporel.

6. Procédé selon l'une quelconque des revendications 3 à 5, dans lequel des informations de restriction de flux binaire sont utilisées au lieu d'informations de niveau pour définir des exigences de décodage pour un point d'interopérabilité correspondant.

7. Appareil, comprenant :
au moins une mémoire et un ou plusieurs processeurs couplés à ladite au moins une mémoire, dans lequel lesdits un ou plusieurs processeurs sont configurés pour :
spécifier une pluralité d'informations de restriction de flux binaire à l'aide d'un ensemble de paramètres dans un flux binaire, ledit flux binaire étant évolutif spatialement, temporellement et en qualité, et dans lequel chaque point d'interopérabilité correspond à une couche évolutive en combinaison avec toutes ses couches dépendantes et est identifié de manière unique par une combinaison de dependency_id, temporal_id et quality_id, dans lequel ledit temporal_id indique un niveau temporel ; et
coder des données de signal vidéo dans ledit flux binaire, ledit flux binaire incluant une pluralité de points d'interopérabilité relatifs à un codage vidéo évolutif,
dans lequel ledit flux binaire inclut une pluralité de niveaux temporels et ledit ensemble de paramètres indique un nombre de niveaux temporels,
dans lequel des informations de restriction de flux binaire sont spécifiées pour chaque niveau temporel dans ledit flux binaire, et
dans lequel chacune de ladite pluralité d'informations de restriction de flux binaire inclut au moins l'un d'une pluralité d'éléments de syntaxe, dans lequel la pluralité d'éléments de syntaxe spécifie :
(1) si le mouvement est sur une frontière d'image,
(2) un nombre maximal d'octets par image,
(3) un nombre maximal de bits par macrobloc,
(4) une longueur maximale de vecteur de mouvement,
(5) un nombre maximal de trames de réorganisation, et
(6) une taille maximale de tampon de trames décodées,
dans lequel toutes les couches évolutives avec le même niveau temporel partagent les mêmes informations de restriction de flux binaire.

8. Appareil selon la revendication 7, dans lequel lesdits un ou plusieurs processeurs sont configurés pour écrire un ou plusieurs parmi : (1) un élément de syntaxe indiquant un identifiant de dépendance, (2) un élément de syntaxe indiquant un niveau temporel, et (3) un élément de syntaxe indiquant un niveau de qualité audit flux binaire pour chaque point d'interopérabilité dans ledit flux binaire.

9. Appareil, comprenant :
au moins une mémoire et un ou plusieurs processeurs couplés à ladite au moins une mémoire, dans lequel lesdits un ou plusieurs processeurs sont configurés pour :
déterminer une pluralité d'informations de restriction de flux binaire à partir d'un ensemble de paramètres dans un flux binaire, ledit flux binaire étant évolutif spatialement, temporellement et en qualité, et dans lequel chaque point d'interopérabilité correspond à une couche évolutive en combinaison avec toutes ses couches dépendantes et est identifié de manière unique par une combinaison de dependency_id, temporal_id et quality_id, dans lequel ledit temporal_id indique un niveau temporel ;
dans lequel ledit flux binaire inclut une pluralité de points d'interopérabilité relatifs à un codage vidéo évolutif,
dans lequel ledit flux binaire inclut une pluralité de niveaux temporels et ledit ensemble de paramètres indique un nombre de niveaux temporels,
dans lequel des informations de restriction de flux binaire sont spécifiées pour chaque niveau temporel dans ledit flux binaire, et
dans lequel chacune de ladite pluralité d'informations de restriction de flux binaire inclut au moins l'un d'une pluralité d'éléments de syntaxe, dans lequel la pluralité d'éléments de syntaxe spécifie :
(1) si le mouvement est sur une frontière d'image,
(2) un nombre maximal d'octets par image,
(3) un nombre maximal de bits par macrobloc,
(4) une longueur maximale de vecteur de mouvement,
(5) un nombre maximal de trames de réorganisation, et
(6) une taille maximale de tampon de trames décodées,
dans lequel toutes les couches évolutives avec le même niveau temporel partagent les mêmes informations de restriction de flux binaire ; et
le décodage d'au moins un point d'interopérabilité à partir dudit flux binaire.

10. Appareil selon la revendication 9, dans lequel lesdits un ou plusieurs processeurs sont configurés pour lire un ou plusieurs parmi : (1) un élément de syntaxe indiquant un identifiant de dépendance, (2) un élément de syntaxe indiquant un niveau temporel, et (3) un élément de syntaxe indiquant un niveau de qualité dudit flux binaire pour chaque point d'interopérabilité dans ledit flux binaire.

11. Appareil selon l'une quelconque des revendications 9 et 10, dans lequel des informations de restriction de flux binaire sont utilisées au lieu d'informations de niveau pour définir des exigences de décodage pour un point d'interopérabilité correspondant.

12. Appareil selon la revendication 7 ou 9, dans lequel une première de ladite pluralité d'informations de restriction de flux binaire est spécifiée pour un premier sous-ensemble de ladite pluralité de points d'interopérabilité, ledit premier sous-ensemble de points d'interopérabilité correspondant à toutes les couches présentant un même premier niveau temporel,
dans lequel une deuxième de ladite pluralité d'informations de restriction de flux binaire est spécifiée pour un deuxième sous-ensemble de ladite pluralité de points d'interopérabilité, ledit deuxième sous-ensemble de points d'interopérabilité correspondant à toutes les couches présentant un même deuxième niveau temporel.

13. Flux binaire, comprenant :
des données de signal vidéo codées dans un flux binaire, ledit flux binaire incluant une pluralité de points d'interopérabilité relatifs à un codage vidéo évolutif, ledit flux binaire étant évolutif spatialement, temporellement et en qualité, et dans lequel chaque point d'interopérabilité correspond à une couche évolutive en combinaison avec toutes ses couches dépendantes et est identifié de manière unique par une combinaison de dependency_id, temporal_id et quality_id, dans lequel ledit temporal_id indique un niveau temporel,
dans lequel une pluralité d'informations de restriction de flux binaire est codée dans le flux binaire à l'aide d'un ensemble de paramètres,
dans lequel ledit flux binaire inclut une pluralité de niveaux temporels et ledit ensemble de paramètres indique un nombre de niveaux temporels,
dans lequel des informations de restriction de flux binaire sont spécifiées pour chaque niveau temporel dans ledit flux binaire, et
dans lequel chacune de ladite pluralité d'informations de restriction de flux binaire inclut au moins l'un d'une pluralité d'éléments de syntaxe, dans lequel la pluralité d'éléments de syntaxe spécifie :
(1) si le mouvement est sur une frontière d'image,
(2) un nombre maximal d'octets par image,
(3) un nombre maximal de bits par macrobloc,
(4) une longueur maximale de vecteur de mouvement,
(5) un nombre maximal de trames de réorganisation, et
(6) une taille maximale de tampon de trames décodées,
dans lequel toutes les couches évolutives avec le même niveau temporel partagent les mêmes informations de restriction de flux binaire.
